# EUROPÄISCHE PATENTANMELDUNG

(11) **EP 1 236 730 A2**
(43) Veröffentlichungstag der Anmeldung: **04.09.2002**
(21) Anmeldenummer: 02003691.9
(22) Anmeldetag: 19.02.2002
(51) Int. Cl.: C07F 5/02

(54) **Verfahren zur Herstellung von aromatischen Boron- und Borinsäuren**

(30) Priorität: 02.03.2001 DE 10110051
(71) Anmelder: Clariant GmbH, 65929 Frankfurt am Main (DE)
(72) Erfinder: Meudt, Andreas, Dr., 65439 Flörsheim-Weilbach (DE); Erbes, Michael, 65779 Kelkheim (DE); Forstinger, Klaus, Dr., 64832 Babenhausen (DE)
(74) Vertreter: Hütter, Klaus, Dr.

(57) **Zusammenfassung**

Verfahren zur Herstellung von Boronsäuren der Formel (I) und Borinsäuren der Formel (II), 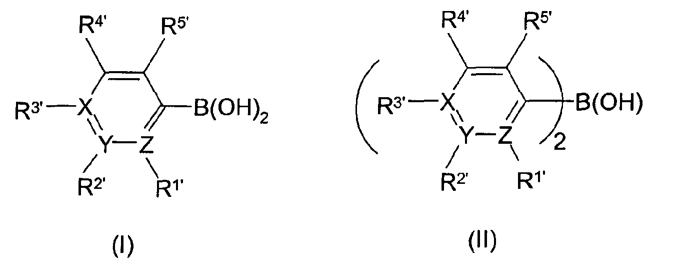 worin die Substituenten R^{1'} bis R^{5'} unabhängig voneinander für H, CH₃, geradkettiges oder verzweigtes C₁-C₈-Alkyl, F, CₙH_{2n+1-f}F_{f} mit n = 1 bis 8 C-Atomen und f = 1 bis 2n+1 Fluoratomen, CH(OC₁-C₅-Alkyl)₂, C(C₁-C₅-Alkyl), (OC1-C₅-Alkyl), CH₂(OC₁-C₅-Alkyl), CH(CH₃)(OC₁-C₅-Alkyl), C₁-C₅-Alkoxy, N(C₁-C₅-Alkyl)₂, Phenyl, substituiertes Phenyl, Aryl, Heteroaryl, S(C₁-C₅-Alkyl), PPhenyl₂, PAryl₂ oder P(C₁-C₅-Alkyl)₂, stehen und
die Symbole X, Y und/oder Z unabhängig voneinander für Kohlenstoff oder XR³', YR²' und/oder ZR¹' für Stickstoff stehen oder XR³' und YR²' zusammen für Sauerstoff stehen oder XR^{3'} und YR^{2'} zusammen für N(C₁-C₅-Alkyl) oder N(SiMe₃) stehen oder XR^{3'} und YR^{2'} zusammen für Schwefel stehen ,
durch Umsetzung von Chloraromaten der Formel (III) mit Lithiummetall und Borverbindungen BW'W"W"', worin W', W" und W"' unabhängig voneinander für (C₁-C₆-Alkoxy), Fluor, Chlor, Brom, lod, N(C₁-C₆-Alkyl)₂ oder S(C₁-C₅-Alkyl) stehen,
in einem Lösungsmittel, bei Temperaturen im Bereich von -100 bis 80°C.

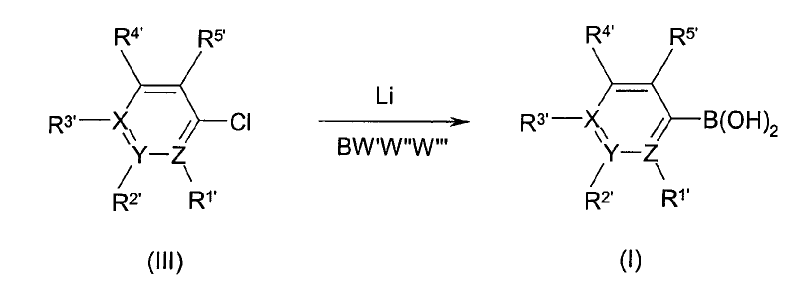

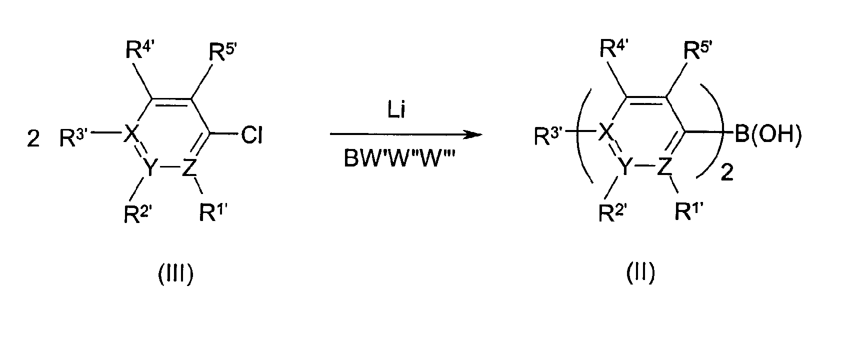

## Beschreibung

Die Erfindung betrifft ein Verfahren zur Herstellung von aromatischen Boron- und Borinsäuren.

Derartige Boron- und Borinsäuren sind vielseitige Bausteine in der organischen Synthese (Stichwort Suzuki-Kupplungen) und wichtige Zwischenprodukte in der Synthese von Wirkstoffen der agrochemischen und pharmazeutischen Industrie, außerdem sind solche Verbindungen für Spezialanwendungen in den verschiedensten Bereichen von höchstem wirtschaftlichen Interesse, beispielsweise als Cokatalysatoren für die Olefinpolymerisation.

Wegen des bestehenden hohen wirtschaftlichen Interesses an diesen Verbindungen sind je nach konkretem Substitutionsmuster der Boronsäuren und Borinsäuren zahlreiche Herstellwege in der Literatur beschrieben.

Die meisten Verfahren des Standes der Technik bestehen aus der Umsetzung von Arylgrignard-Verbindungen mit Bor-Verbindungen im Verhältnis von etwa 1:1 bei Boronsäuren und etwa 2:1 bei Borinsäuren. Im allgemeinen erhält man hierbei gute Ausbeuten an Boronsäuren (meist 50-80 %) und mäßige Ausbeuten (meist < 65 %) an Borinsäuren (allgemein anwendbare Boronsäure-Herstellvorschriften: Washburn, Org. Synth. 1959, 39, 3; Povlock, J. Am. Chem. Soc. 1958, 80, 5409; Snyder, J. Am. Chem. Soc. 1948, 70, 234; Herstellung von Gemischen aus Boron- und Borinsäuren: Hawthorne, J. Org. Chem. 1957, 22, 1001; Herstellung von Borinsäuren: Colette, Organomet. 11(2), 652-657 (1992))

Mit größtem Erfolg werden bei der Herstellung der Grignard-Verbindungen Bromaromaten eingesetzt, da deren Grignard-Verbindungen am leichtesten hergestellt werden können (gutes Anspringen der Reaktion, hohe Ausbeuten, wenig Biphenyl-Bildung). Leider sind diese Bromaromaten in den meisten Fällen sehr viel teurer als die entsprechenden Chloraromaten ("Organomagnesium methods in organic synthesis", Wakefield, Academic Press, S. 32/33).

lodaromaten sind noch deutlich teurer, außerdem werden hier vermehrt Biphenyle bei der Grignard-Präparation gebildet, wodurch schlechte Gesamtausbeuten und mäßige Reinheiten der Zielverbindungen resultieren.

Aus den genannten Gründen muss man für ein ökonomisches Verfahren zur Herstellung von Boronsäuren und Borinsäuren zwangsläufigerweise Chloraromaten einsetzen. Leider ist die Herstellung von Grignard-Verbindungen aus Chloraromaten nicht immer möglich, da bekanntermaßen viele Chloraromaten nur schwierig und mit schlechten Ausbeuten oder gar nicht grignardisierbar sind. Dies gilt beispielsweise für 1-Chlornaphthalin, bei dem spezielle und teure Arbeitstechniken wie der Einsatz von Rieke-Magnesium erforderlich ist, um nennenswerte Umsätze zu erreichen ("Organomagnesium methods in organic synthesis", Wakefield, Academic Press).

Aus verfahrenstechnischer Sicht ist die Herstellung von Grignard-Verbindungen aus Chloraromaten auch deshalb problematisch, weil die Reaktion häufig zunächst gar nicht und dann sehr plötzlich und oft unkontrolliert anspringt. Es wird oft beobachtet, dass die Zeit bis zum Anspringen sehr stark von der Qualität der eingesetzten Lösungsmittel abhängt (beispielsweise Wassergehalt, Gehalt an Radikalbildnern und Metallionen etc.). Für einen kontrollierten technischen Prozess sind dies keine optimalen Voraussetzungen.

Die Umsetzung der Arylgrignard-Verbindungen mit Bor-Verbindungen, meist Borsäureestern oder-halogeniden, ist oft für die Herstellung von Borinsäuren mit niedrigen Ausbeuten verbunden, weil sich zunächst Komplexe beispielsweise der Formel Ar-B(OR)₃⁻ bilden, wodurch die Addition eines zweiten Aryl-Äquivalents erschwert ist. Dadurch entstehen häufig nur Mischungen aus Boron- und Borinsäuren (Hawthorne, J. Org. Chem. 1957, 22, 1001), wodurch nach erforderlicher Aufreinigung nur mäßige Gesamtausbeuten erhalten werden können.

Das größte Problem und der größte Kostentreiber bei der Herstellung von Boronund Borinsäuren über Arylgrignard-Verbindungen ist aber der erhebliche apparative Aufwand. Da Arylgrignard-Verbindungen nur in ganz wenigen Fällen und dann zu extrem hohen Preisen kommerziell erhältlich sind, muss man in einem ersten, meist auf Rückflusstemperatur gehaltenen Kessel die Grignard-Verbindung herstellen, nach Erreichen vollständigen Umsatzes darin abkühlen, in einem zweiten Kessel die Borverbindung vorlegen, diese auf möglichst niedrige Temperaturen abkühlen, anschließend die ebenfalls gekühlte Grignard-Verbindung zudosieren, auftauen, in einem dritten Kessel hydrolysieren (Kessel 1 und 2 müssen trocken bleiben) und die Aufarbeitung in diesem dritten oder einem weiteren Kessel durchführen. Durch die gleichzeitige Belegung mehrerer Kessel und die notwendigen, bei größeren Mengen langwierigen Aufheiz- und Abkühlphasen erreicht man nur mäßige Raum/Zeit-Ausbeuten und hohe Produktionskosten (Houben-Weyl, "Bor-Verbindungen I", IV. Auflage, S. 636).

Es besteht daher das Bedürfnis ein Verfahren zur Verfügung zu stellen, bei dem als Ausgangsverbindungen Chloraromaten und Borverbindungen eingesetzt werden können, bei dem idealerweise alle Verfahrensschritte bei ein- und derselben Temperatur oder einer nur geringfügig verschiedenen Temperatur durchgeführt werden und dadurch lange Temperierungsphasen vermieden werden können. Noch wichtiger wäre aber die Möglichkeit, die Herstellung des metallorganischen Reagenzes im gleichen Kessel wie die Umsetzung mit der Borverbindung durchführen zu können.

Da aber die Herstellung der Grignard-Verbindung meist bei Rückflusstemperatur des verwendeten Lösungsmittels, die Borat-Addition aber aus Selektivitätsgründen bei Temperaturen < 0°C durchgeführt werden muss, erscheint dies über eine Grignard-Route nicht möglich.

Ein weiterer, häufig beschrittener Weg zur Herstellung von Boron- und Borinsäuren ist die Umsetzung von lithiierten Aromaten mit Borverbindungen. Die Herstellung von Lithioaromaten kann ebenfalls auf zahlreichen Wegen erfolgen. Beispielsweise ist die Umsetzung von Brom- und lodaromaten mit Butyllithium ein Standardweg, um Lithioaromaten zu generieren. Dieser Austausch lässt sich bei tiefen Temperaturen durchführen, bei denen dann auch die Umsetzungen mit Borverbindungen durchgeführt werden können.

Leider lässt sich diese Umsetzung aber nicht mit Chloraromaten durchführen, da diese mit sehr wenigen Ausnahmen nicht mit Butyllithium reagieren. Aufgrund dieser Tatsache und des hohen Preises für Butyllithium resultiert trotz der genannten Vorteile in der Gesamtbilanz kein besonders ökonomisches Verfahren.

Weitere Methoden zur Herstellung von Lithiumverbindungen sind zahlreich beschrieben, allerdings bisher kein Gesamtprozess zur Herstellung von Borin- und Boronsäuren, der allen oben beschriebenen Anforderungen genügt.

Aufgabe ist es somit ein Verfahren zur Herstellung von Verbindungen der Formel (I) zu entwickeln, das von kommerziell leicht erhältlichen und günstigen Chlorverbindungen ausgeht, das die benötigten Borin- und Boronsäuren in guten Ausbeuten und hohen Reinheiten zugänglich macht und das dabei gleichzeitig verfahrenstechnisch einfach, effizient und kostengünstig arbeitet. Letzteres beinhaltet gleichzeitig die Durchführung aller Verfahrensschritte ausschließlich Hydrolyse und Aufarbeitung bei im wesentlichen der selben Temperatur und nach Möglichkeit in ein- und demselben Reaktionskessel. Idealerweise ermöglicht das Verfahren daneben auch die direkte Herstellung der Zielverbindungen durch einfaches Rühren von Chloraromat, Metall und Borverbindung in einem geeigneten Lösungsmittel.

Die vorliegende Erfindung löst alle diese Aufgaben und betrifft ein Verfahren zur Herstellung von Boronsäuren der Formel (I) und Borinsäuren der Formel (II), 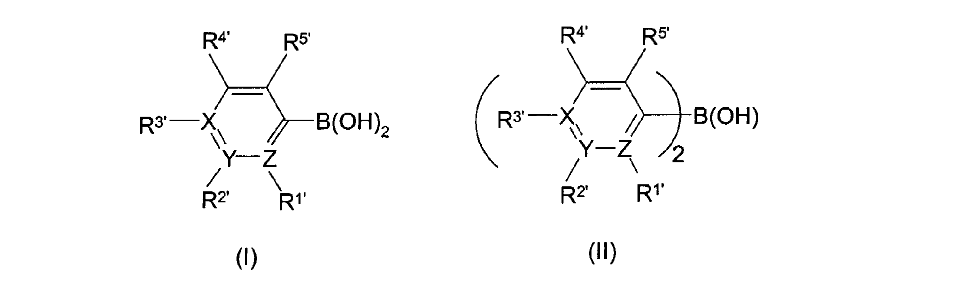 worin die Substituenten R^{1'} bis R^{5'} unabhängig voneinander für H, CH₃, geradkettiges oder verzweigtes C₁-C₈-Alkyl, insbesondere C₁-C₄-Alkyl, F, CₙH_{2n+1-f}F_{f} mit n = 1 bis 8 C-Atomen und f = 1 bis 2n+1 Fluoratomen, CH(OC₁-C₅-Alkyl)₂, C(C₁-C₅-Alkyl)(OC₁-C₅-Alkyl), CH₂(OC₁-C₅-Alkyl), CH(CH₃)(OC₁-C₅-Alkyl), C₁-C₅-Alkoxy, insbesondere C₁-C₄-Alkoxy, N(C₁-C₅-Alkyl)₂, Phenyl, substituiertes Phenyl, Aryl, Heteroaryl, S(C₁-C₅-Alkyl), PPhenyl₂, PAryl₂ oder P(C₁-C₅-Alkyl)₂ stehen und
die Symbole X, Y und/oder Z unabhängig voneinander für Kohlenstoff (Phenylboronoder -borinsäuren) oder XR^{3',} YR^{2'} und/oder ZR^{1'} für Stickstoff (Pyridylboron- oder borinsäuren) stehen oder XR^{3'} und YR^{2'} zusammen für Sauerstoff stehen (2- und 3-Furanboron- oder borinsäuren) oder XR^{3'} und YR^{2'} zusammen für N(C₁-C₅-Alkyl) oder N(SiMe₃) stehen (Pyrrolboron- oder borinsäuren) oder XR^{3'} und YR^{2'} zusammen für Schwefel stehen (2- und 3-Thiophenboron- oder borinsäuren),
durch Umsetzung von Chloraromaten der Formel (III) mit Lithiummetall und Umsetzung mit Borverbindungen BW'W''W'''', worin W', W" und W"' unabhängig voneinander für (C₁-C₆-Alkoxy), Fluor, Chlor, Brom, lod, N(C₁-C₆-Alkyl)₂ oder S(C₁-C₅-Alkyl) steht. 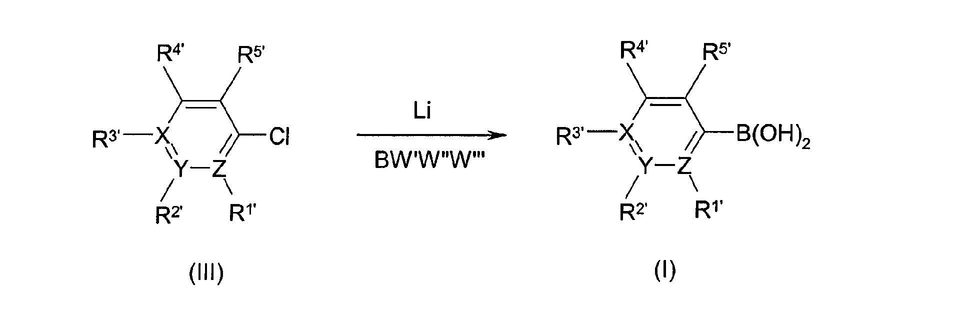 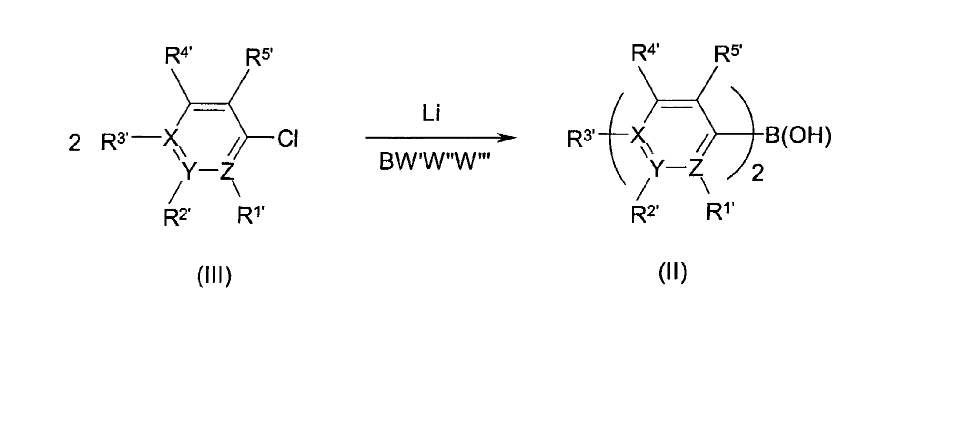 in einem Lösungsmittel, bei Temperaturen im Bereich von -100 bis 80°C. Erfindungsgemäß einsetzbare Chloraromaten sind z.B. p-Chlorbenzotrifluorid, 2-Chlorpyridin, 2-Chlorthiophen, 3-Chlorthiophen, 2-Chlornaphthalin, 1-Chlornaphthalin, p-Chloranisol, Chlorpentafluorbenzol oder p-Fluorchlorbenzol, um nur einige zu nennen.

Des weiteren können erfindungsgemäß durch Variation der Aufarbeitungsbedingungen bzw. Trocknungsbedingungen oder durch nachträgliche Derivatisierung auch Anhydride der Boronsäuren oder Borinsäuren oder Ester mit ein- oder mehrwertigen, geradkettigen oder verzweigten Alkoholen erhalten werden.

Die erfindungsgemäße Umwandlung von Chloraromaten in Boron- und Borinsäuren kann dabei je nach Substitutionsmuster der Zielverbindungen und nach Vorgaben des jeweiligen Produktionsbetriebs auf verfahrenstechnisch verschiedenen Wegen durchgeführt werden. Zum einen ist es möglich, bei der Reaktionstemperatur den Chloraromaten mit Lithium in einem geeigneten Lösungsmittel solange zu rühren, bis der Chloraromat möglichst vollständig in den Lithioaromaten umgewandelt ist, um dann bei der gleichen oder im wesentlichen gleichen Temperatur (Differenz < 50 K) die Borverbindung BW'W''W'' zuzudosieren und mit dem Lithioaromaten umzusetzen, wobei alle Schritte in einem Reaktionsgefäß (Kessel) durchgeführt werden können (Eintopfverfahren), zum anderen kann der Chloraromat in einem geeigneten Lösungsmittel und bei einer geeigneten Temperatur, vorzugsweise bei einer Temperatur im Bereich von -85 bis +25°C, gleichzeitig mit Lithium und der Borverbindung BW'W''W'' unter Rühren zur Reaktion gebracht wird, wobei direkt Komplexe der Borin- und Boronsäuren gebildet werden, die nach Hydrolyse die freien Borin- und Boronsäuren ergeben. Es kann auch zunächst der Lithioaromat generiert werden, der dann in umgekehrter Weise wie oben beschrieben zu einer Borverbindung dosiert wird. Besonders bevorzugte Ausführungsformen sind erstgenannte Eintopfverfahren.

In einer weiteren Ausgestaltung des erfindungsgemäßen Verfahrens ist es möglich, die Herstellung des Lithioaromat und Umsetzung mit der Borverbindung in zwei getrennten Reaktionsgefäßen durchzuführen. Hierbei kann die Umsetzung des Chloraromaten mit dem Lithiummetall zu einem Lithioaromaten und die anschließende Umsetzung des Lithioaromaten mit der Borverbindung BW'W''W''' bei der gleichen oder einer nur geringfügig abweichenden Temperatur (< 50 K Differenz) durchgeführt werden.

Geeignete Lösungsmittel für die erfindungsgemäße Umwandlung von Chloraromaten in Borin- und Boronsäuren sind aliphatische und aromatische Ether und Kohlenwasserstoffe und Amine, die keinen Wasserstoff am Stickstoff tragen, bevorzugt Triethylamin, Diethylether, Tetrahydrofuran (THF), Di-n-butylether, tert.-Butylmethylether, Xylol, Toluol, Toluol/Tetrahydrofuran-Mischungen, Anisol oder Diisopropylether, oder Lösungsmittelmischungen, die eines der voranstehenden Lösungsmittel enthalten, besonders bevorzugt Triethylamin, THF oder Diisopropylether.

Die erfindungsgemäße Umwandlung von Chloraromaten zu Borin- und Boronsäuren wird vorteilhaft bei Temperaturen zwischen -100°C und +80°C durchgeführt, bevorzugt bei -80°C bis +20°C, besonders bevorzugt zwischen -65°C und -10°C.

Das Lithium kann im vorliegenden Verfahren als Dispersion, Pulver, Späne, Sand, Granalien, Stücke, Barren oder in anderer Form eingesetzt werden, wobei die Größe der Lithiumpartikel nicht qualitätsrelevant ist, sondern lediglich die Reaktionszeiten beeinflusst. Daher sind kleinere Partikelgrößen bevorzugt, beispielsweise Granalien, Pulver oder Dispersionen.
Die Reaktionszeiten liegen üblicherweise im Bereich von 0,5 bis 15 Stunden, vorzugsweise im Bereich von 3 bis 10 Stunden.
Es werden bevorzugt zwischen 2,0 und 3,0 Äquivalente, besonders bevorzugt zwischen 2,0 und 2,4 Äquivalente Lithium je mol Chlorverbindung der Formel (III) eingesetzt.

Als Borverbindungen werden Verbindungen der Formel BW'W''W''', worin W', W" und W''' unabhängig voneinander für (C₁-C₆-Alkoxy), Fluor, Chlor, Brom, lod, N(C₁-C₆-Alkyl)₂ oder S(C₁-C₅-Alkyl) steht, eingesetzt, bevorzugt sind dabei Trialkoxyborane, BF₃*OR₂, (mit R = CH₃, C₂H₅, C₃H₇, C₄H₉), BF₃*THF, BCl₃ oder BBr₃, besonders bevorzugt Trialkoxyborane, sowie Verbindungen Cl₂B(OR) und BrB(NMe₂)₂, wobei R die vorstehend genannte Bedeutung hat.

In der Regel wird so vorgegangen, dass das Lithiummetall in dem entsprechenden Lösungsmittel vorgelegt wird und der Chloraromat der Formel (III), gegebenenfalls in dem gleichen oder einem anderen Lösungsmittel gelöst, in einer der bevorzugten Ausführungsformen zugleich in der Mischung mit der Borverbindung zudosiert wird. In einer weiteren bevorzugten Ausführungsform wird zunächst nur der Chloraromat, gegebenenfalls in einem Lösungsmittel gelöst, zum Lithiummetall dosiert, bis zur möglichst vollständigen Umsetzung gerührt und erst anschließend die Borverbindung zudosiert.

Zur Aufarbeitung der Reaktionslösung wird diese hydrolysiert, wobei entweder Wasser bzw. wässrige Mineralsäuren zudosiert werden oder die Reaktionsmischung auf Wasser bzw. wässrige Mineralsäuren dosiert wird. Bei der weiteren Aufarbeitung werden die Boron- und Borinsäuren beispielsweise durch Extraktion und Eindampfen der organischen Phasen gewonnen, alternativ können auch aus der Hydrolysemischung die organischen Lösungsmittel abdestilliert und das dann ausfallende Produkt durch Filtration gewonnen werden. In Abhängigkeit vom Substitutionsmuster und den genauen Bedingungen erhält man so die freien Boronsäuren oder Borinsäuren. Die Anhydride dieser Verbindungen werden nach dem Fachmann bekannten Methoden, beispielsweise durch Trocknung im Vakuum und bei erhöhter Temperatur, erhalten. Ebenfalls nach gebräuchlichen Methoden lassen sich die Ester der Boron- und Borinsäuren erhalten, indem beispielsweise die Rohprodukte aus den erfindungsgemäßen Umsetzungen mit den entsprechenden Alkoholen unter chemischer oder physikalischer Entfernung von Wasser umgesetzt werden.

Zur Herstellung von Boronsäuren der Formel (I) werden im allgemeinen 0,96 bis 1,30 Äquivalente Chlorverbindung der Formel (III) je Mol Borverbindung BW'W''W''' eingesetzt, bevorzugt 0,98 bis 1,15 Äquivalente. Zur Herstellung von Borinsäuren der Formel (II) müssen im allgemeinen Überschüsse von 2,02 bis 2,85 Äquivalente Chlorverbindung der Formel (III) je Mol Borverbindung BW'W''W''' eingesetzt werden, bevorzugt 2,10 bis 2,45 Äquivalente.

Die Reinheiten der Produkte aus den erfindungsgemäßen Verfahren sind im allgemeinen sehr hoch, für Spezialanwendungen (Pharmavorprodukte) kann allerdings noch ein weiterer Aufreinigungsschritt, beispielsweise durch Umkristallisation unter Zusatz geringer Mengen Aktivkohle, erforderlich werden. Die Ausbeuten an Boronsäuren betragen 90 bis 99 %, die Ausbeuten an Borinsäuren betragen üblicherweise 85 bis 95 %.

Die Rohstoffe für die erfindungsgemäße Synthese (Chloraromat und Borverbindung) sind ganz allgemein sehr preisgünstig kommerziell erhältlich, so dass in Kombination mit den genannten verfahrenstechnischen Vorzügen und damit verbundenen hohen Raum/Zeit-Ausbeuten und sehr hohen Produktreinheiten ein äußerst ökonomischer und sehr generell anwendbarer Prozess zur Herstellung der erfindungsgemäßen Boron- und Borinsäuren gefunden wurde.

Das erfindungsgemäße Verfahren soll durch die nachfolgenden Beispiele erläutert werden, ohne die Erfindung darauf zu beschränken:

### Beispiel 1

### Herstellung von Phenylboronsäure

112,5 g Chlorbenzol (1 mol) werden zu einer Suspension von 13,8 g Lithiumgranalien (2,0 mol) in 350 ml THF bei -40°C zugetropft, wobei als Dosierzeit 2 Stunden gewählt wurde. Nach einem per GC bestimmten Umsatz (dunkle Farbe der Reaktionsmischung lässt Grad des Li-Verbrauchs nicht erkennen) von > 98 % (insgesamt 4,5 Stunden) werden bei der gleichen Temperatur 145,8 g Triethylborat (1,0 mol) in 30 Minuten zudosiert. Nach einstündigem Nachrühren werden 228 ml 2,5 % HCI zudosiert. Nach Abdestillieren von THF und dem aus der Borverbindung gebildeten Ethanol im leichten Vakuum und einer Maximaltemperatur von 60°C fällt die gebildete Boronsäure aus und kann nach Abkühlen auf 10°C und Einstellen eines pH von 4,2 abfiltriert und bei max. 60°C/100 mbar getrocknet werden. Man erhält 118,2 g Phenylboronsäure (0,97 mol, 97 %) als farbloses bis gelbliches Pulver, HPLC-Reinheit > 99 %.

### Beispiel 2

### Herstellung von p-Tolylboronsäure

Eine Lösung von 253 g p-Chlortoluol (2,0 mol) und 207,6 g Trimethylborat (2,0 mol) in 250 ml THF wird in 2,5 Stunden zu einer Suspension von 28 g Lithiumgranalien (4,06 mol) in 350 ml THF bei -50°C getropft. Nach vierstündigem Nachrühren bei -50°C zeigte das HPLC einen quantitativen Verbrauch des Chloraromaten an. Nach Zugabe von 400 ml 5 % HCI und Abdestillieren von THF und Methanol fiel die gebildete Boronsäure aus und wurde nach Abkühlen auf 10°C durch Filtration isoliert. Nach Trocknen bei max. 65°C/110 mbar erhält man 264,8 g p-Tolylboronsäure (1,95 mol, 97,5 %) als farbloser bis leicht gelblicher Feststoff.

### Beispiel 3

### Herstellung von Di-p-tolylborinsäure

Eine Lösung von 253 g p-Chlortoluol (2,0 mol) und 104 g Trimethylborat (1,0 mol) in 150 ml Diisopropylether wird in 2,5 Stunden zu einer Suspension von 28 g Lithiumgranalien (4,06 mol) in 350 ml Diisopropylether bei -20°C getropft. Nach vierstündigem Nachrühren bei -20°C zeigte das HPLC einen quantitativen Verbrauch des Chloraromaten an. Nach Zugabe von 340 ml 2,5 % HCI und Abdestillieren von Diisopropylether und Methanol fiel die gebildete Borinsäure aus und wurde nach Abkühlen auf 10°C durch Filtration isoliert. Nach Trocknen bei 70°C/110 mbar wurde Di-p-tolylborinsäure in einer Ausbeute von 88 % und als gelblicher Feststoff erhalten, HPLC-Reinheit > 95 %.

### Beispiel 4

### Herstellung von p-Anisylboronsäure

Ausgehend von p-Chloranisol wurde analog zur Vorschrift aus Beispiel 1 p-Anisylboronsäure in einer Ausbeute von 96 % und einer HPLC-Reinheit von > 98,5 % erhalten.

### Beispiel 5

### Herstellung von m-Fluorphenylboronsäure

Ausgehend von m-Fluorchlorbenzol wurde analog zur Vorschrift aus Beispiel 1 m-Fluorphenylboronsäure in einer Ausbeute von 95 % erhalten.

### Beispiel 6

### Herstellung von Furan-2-boronsäure

Ausgehend von 2-Chlorfuran wurde analog zu Beispiel 1 2-Furanboronsäure in einer Rohausbeute von 87 % als dunkles Öl erhalten. Nach Filtration über Primisil (Lösungsmittel Methanol/Dichlormethan 1:1) und Eindampfen erhält man das Produkt in einer HPLC-Reinheit von 97 %.

### Beispiel 7

### Herstellung von p-Trifluormethylphenylboronsäure

Analog zur Vorschrift aus Beispiel 1, allerdings bei einer Reaktionstemperatur von -65°C und unter Verwendung von Trimethylborat, wurde p-Trifluormethylphenylboronsäure in einer Ausbeute von 94 % erhalten (HPLC a/a 98,1 %). Nach Trocknung bei 70°C und 5 mbar erhält man das Anhydrid dieser Boronsäure.

## Patentansprüche

1. Verfahren zur Herstellung von Boronsäuren der Formel (I) und Borinsäuren der Formel (II), 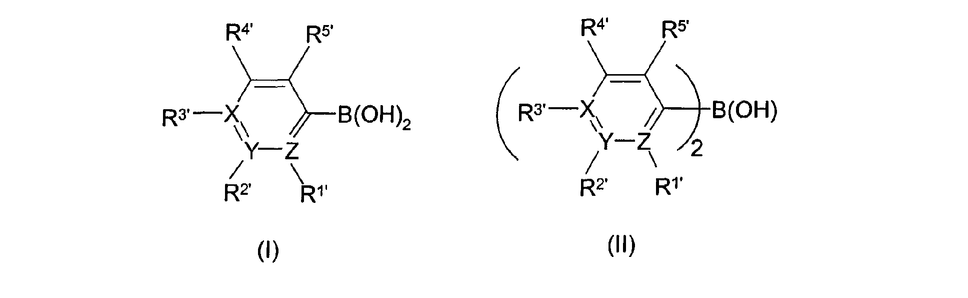 worin die Substituenten R^{1'} bis R^{5'} unabhängig voneinander für H, CH₃, geradkettiges oder verzweigtes C₁-C₈-Alkyl, F, CₙH_{2n+1-f}F_{f} mit n = 1 bis 8 C-Atomen und f = 1 bis 2n+1 Fluoratomen, CH(OC₁-C₅-Alkyl)₂, C(C₁-C₅-Alkyl), (OC1-C₅-Alkyl), CH₂(OC₁-C₅-Alkyl), CH(CH₃)(OC₁-C₅-Alkyl), C₁-C₅-Alkoxy, N(C₁-C₅-Alkyl)₂, Phenyl, substituiertes Phenyl, Aryl, Heteroaryl, S(C₁-C₅-Alkyl), PPhenyl₂, PAryl₂ oder P(C₁-C₅-Alkyl)₂, stehen und
die Symbole X, Y und/oder Z unabhängig voneinander für Kohlenstoff oder XR^{3'}, YR^{2'} und/oder ZR^{1'} für Stickstoff stehen oder XR^{3'} und YR^{2'} zusammen für Sauerstoff stehen oder XR^{3'} und YR^{2'} zusammen für N(C₁-C₅-Alkyl) oder N(SiMe₃) stehen oder XR^{3'} und YR^{2'} zusammen für Schwefel stehen ,
durch Umsetzung von Chloraromaten der Formel (III) mit Lithiummetall und Borverbindungen BW'W''W''', worin W', W" und W"' unabhängig voneinander für (C₁-C₆-Alkoxy), Fluor, Chlor, Brom, lod, N(C₁-C₆-Alkyl)₂ oder S(C₁-C₅-Alkyl) stehen,
in einem Lösungsmittel, bei Temperaturen im Bereich von -100 bis 80°C.

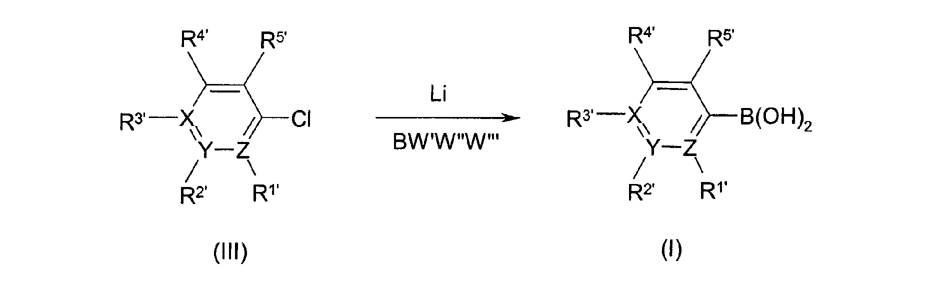

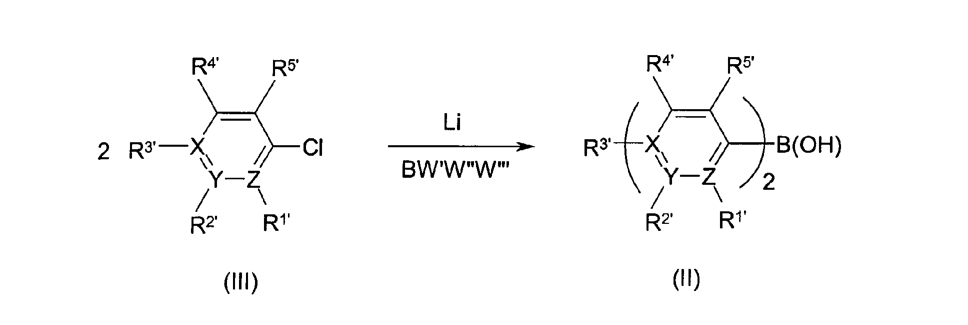

2. Verfahren nach Anspruch 1, **dadurch gekennzeichnet, dass** das Lithium in Form von Dispersionen, Pulver, Spänen oder Sand eingesetzt wird.

3. Verfahren nach Anspruch 1 oder 2, **dadurch gekennzeichnet, dass** das Lösungsmittel aus folgender Gruppe ausgewählt ist: Triethylamin, Diethylether, Tetrahydrofuran, Di-n-butylether, tert.-Butylmethylether, Xylol, Toluol, Toluol/Tetrahydrofuran-Mischungen, Anisol oder Diisopropylether, oder Lösungsmittelmischungen, die eines der voranstehenden Lösungsmittel enthalten.

4. Verfahren nach mindestens einem der vorhergehenden Ansprüche, **dadurch gekennzeichnet, dass** zur Herstellung von Boronsäuren der Formel (I) 0,96 bis 1,30 Äquivalente Chlorverbindung (III) je Mol Borverbindung BW'W''W''' eingesetzt werden.

5. Verfahren nach mindestens einem der vorhergehenden Ansprüche, **dadurch gekennzeichnet, dass** zur Herstellung von Borinsäuren der Formel (II) 2,02 bis 2,85 Äquivalente Chlorverbindung (III) je Mol Borverbindung BW'W''W''' eingesetzt werden.

6. Verfahren nach mindestens einem der vorhergehenden Ansprüche, **dadurch gekennzeichnet, dass** als Borverbindung der Formel BW'W''W Trialkoxyborane, BF₃*OR₂, (mit R = CH₃, C₂H₅, C₃H₇, C₄H₉), BF₃*THF, BCl₃ oder BBr₃, Cl₂B(OR) und BrB(NMe₂)₂, wobei R die vorstehend genannte Bedeutung hat, eingesetzt werden.

7. Verfahren nach mindestens einem der vorhergehenden Ansprüche, **dadurch gekennzeichnet, dass** die Umsetzung des Chloraromaten mit dem Lithiummetall zu einem Lithioaromaten und die Umsetzung des Lithioaromaten mit der Borverbindung BW'W''W''' in einem Reaktionsgefäß bei der gleichen oder im wesentlichen gleichen Temperatur durchgeführt werden.

8. Verfahren nach mindestens einem der vorhergehenden Ansprüche 1 bis 6, **dadurch gekennzeichnet, dass** der Chloraromat gleichzeitig mit Lithium und der Borverbindung BW'W''W''' unter Rühren zur Reaktion gebracht wird.

9. Verfahren nach mindestens einem der vorhergehenden Ansprüche 1 bis 6, **dadurch gekennzeichnet, dass** wenn die Herstellung von Lithioaromat und Umsetzung mit einer Borverbindung in zwei getrennten Reaktionsgefäßen stattfindet beide Umsetzungen bei der gleichen oder einer nur geringfügig abweichenden Temperatur (< 50 K Differenz) durchgeführt werden.

10. Verfahren nach mindestens einem der vorhergehenden Ansprüche, **dadurch gekennzeichnet, dass** die erhaltene Reaktionslösung anschließend hydrolysiert und nach geeigneten Methoden aufgearbeitet wird.
